# EUROPEAN PATENT APPLICATION

(11) **EP 1 595 913 A1**
(43) Date of publication of application: **16.11.2005**
(21) Application number: 04102124.7
(22) Date of filing: 14.05.2004
(51) Int. Cl.: C08J 7/12, B29C 71/04, B05D 7/24

(54) **Method for preparing a hollow element of a fuel system**

(71) Applicant: Inergy Automotive Systems Research (SA), 1120 Bruxelles (BE)
(72) Inventor: Dubois, Eric, 4260 Ciplet (BE)
(74) Representative: Jacques, Philippe

(57) **Abstract**

The present invention relates to a method for preparing a hollow element of a fuel system comprising that a hollow element comprising a polymeric surface is subjected to an activation step and to a grafting step. In the grafting step, a fluorinated C₂-C₄ hydrocarbon is grafted onto the activated polymeric surface of the hollow element. The invention further relates to a hollow element obtainable by the method of the invention and to the use of a fluorinated C₂-C₄ hydrocarbon for reducing the permeability of products such as fuel tanks or a fuel pipes with respect to methanol and/or hydrocarbons.

## Description

The present invention relates to a method for preparing a hollow element of a fuel system using the technique of plasma treatment. The method of the invention comprises an activation step and a grafting step. In the activation step, the polymeric surface of a hollow element is activated. In the grafting step, fluorinated C₂-C₄ hydrocarbon compounds are grafted on the activated polymeric surface of the hollow element. The invention further relates to hollow elements obtainable by this method and to the use of fluorinated C₂-C₄ hydrocarbon compounds for reducing the permeability of fuel tanks and pipes with respect to methanol and/or hydrocarbons.

Containers made from polymers such as polyethylenes provide a large number of design advantages over those made from metal or glass, for example, flexibility, reduced weight, low-cost fabrication, good resistance to corrosion, and breakage. These advantages explain the great interest of automotive and oil industries to produce hollow elements, e.g., fuel tanks and pipes, in high-density polyethylene (HDPE). Unfortunately, polyethylene (PE) is highly permeable to the main constituents of gasoline (hydrocarbons, oxygen, etc.).

One technique used to reduce the permeability of organic compounds through the walls of the hollow elements is fluorination or sulfonation of the polymer surfaces of the walls. The agents used for sulfonation, however, are toxic and give rise to environmental problems.

Direct fluorination of polymers such as polyethylene can be obtained in gas phase by fluorine diluted with an inert gas. This traditional fluorination, however, is time-consuming and expensive. Furthermore, the permeability of the fluorinated polymer surface is sometimes not satisfactory, in particular if the hollow element has been used for some time and has been subjected to mechanical stress.

Fluorination can also be obtained by plasma polymerization. There are several documents which describe the application of plasma processing techniques to deposit thin fluorocarbon layers on polymers:
US patent application No. 2003/0040807 A1 relates to a method for treating a polymeric component of a prosthetic implant, comprising treating the polymeric component with a gas plasma. The method may include the use of various fluorinated compounds after an optional cleaning step with an inert gas such as argon. US patent No. 4,869,922 discloses a process for coating plastic materials with a polyfluorocarbon film by way of plasma polymerization of gaseous streams of H₂ and CF₄ and/or C₂F₆. The US documents do not aim at improving the barrier properties of polymers, and hollow elements such as a fuel tank or a pipe are not mentioned.
DE 3908418 A1 describes a method for treating the surface of polymer containers by exposing them to a low-pressure plasma comprising a polymerizable component, e.g., an unsaturated hydrocarbon, and a polarizing component, e.g., CHF₃. EP 0 739 655 A1 teaches the incorporation of polar and non-polar elements in a thin layer. In one embodiment, ethylene (C₂H₄) and trifluoromethane (CHF₃) are used in a process for preparing tapered layers. Similarly, Walker et al. (1997) J Appl Polym Sci 64, 717-722 describe permeability studies of thin barrier films polymerized from C₂H₄/CHF₃ electron cyclotron resonance (ECR) plasmas. The resulting fluorocarbon layer shows improved toluene barrier properties of PE. Serpe et al. (1996) J Appl Polym Sci 61, 1707-1715 describe studies on PE plasma fluorination and permeability relationships to methanol-gasoline mixtures. Plasma generated from CF₄ or SF₆ was used to coat HDPE and medium density polyethylene (MDPE). Analytical methods showed the presence of -CF₃ groups at the surface of polymeric membranes. The described method, however, has the drawback that fluorine is removed from the surface by contact with the gasolines. The fluorinated carbon molecules used in DE 3908418 A1, EP 0 739 655 A1, Walker et al. and Serpe et al. are limited to C₁ compounds (CF₄ or CHF₃).

Plasma fluorination with C₁ compounds, as done in the prior art, indeed improves the barrier properties of fuel tanks. However, the barrier properties are not always satisfactory. In particular, small polar organic compounds such as methanol, which are present in fuel can still permeate through the fuel tanks to a degree which is not always acceptable. Furthermore, in practice, fuel tanks and similar products, in particular if used in the automotive industry, are subjected to mechanical stress, e.g., during positive and negative acceleration of cars. This stress can weaken the impermeable layer on the polymer surface of the fuel tank, and therefore very often the permeability of such plasma fluorinated fuel tanks increases (gets worse) during use.

Hence, there is an ongoing need to improve the barrier properties of polymeric materials and to provide environmental friendly coating techniques with low production costs. Preferably, the loss of barrier properties over time should be as low as possible.

The present invention therefore relates to a method for preparing a hollow element of a fuel system comprising that a hollow element comprising a polymeric surface is subjected to the following steps:
(a) activating the polymeric surface; and
(b) contacting the polymeric surface with a gas plasma generated from at least one compound which is a fluorinated C₂-C₄ hydrocarbon.

The prior art does not teach or suggest the use of a fluorinated C₂-C₄ hydrocarbon for manufacturing a hollow element of a fuel system. Fluorinated C₂-C₄ hydrocarbons have never been used to improve the barrier properties of fuel tanks or similar products against compounds of fuel such as hydrocarbons or methanol.

"Hollow elements" are products having a cavity or a hole or an inner space which may be surrounded by a barrier. The hollow element may have one, two, three or more openings which connect the inner space with the exterior of the element. The openings may be closed if necessary. In another embodiment, the element does not have an opening and the inner space is not connected to the exterior of the element. Examples of hollow elements are tubes or containers.

As used herein, the term "element of a fuel system" denotes any product which may have contact to fuels. Examples of hollow elements of a fuel system include, but are not limited to, fuel tanks, fuel canisters and fuel pipes. Preferred hollow elements of a fuel system are fuel tanks or fuel pipes of vehicles.

According to the invention, a hollow element comprising a polymeric surface is subjected to steps (a) and (b). The polymeric surface may be an inner surface and/or an outer surface of the hollow element, preferably it is an inner surface. At least part of the inner and/or outer surface of the hollow element is polymeric. Preferably, the entire inner surface of the hollow element is polymeric.

The hollow element may essentially consist of one or more polymeric materials. In one embodiment, the wall of the hollow element comprises only one layer made from a polymeric material. In another embodiment, the wall of the hollow element comprises a layer made from a first material, and the inner and/or outer surface of the layer, preferably the inner surface of the layer, is at least partially coated, preferably completely coated with a second material which is a polymeric material, thus forming the polymeric surface. The first material may be a polymeric or a non-polymeric material.

The polymeric material is preferably selected from the group consisting of polyethylene, polyethylene terephthalate, polybutylene terephthalate, polyamide, polyoxymethylene, polypropylene, elastomers and mixtures of two or more thereof. The polymeric surface may also contain metals in addition to the polymeric material. Preferably, the polymeric material comprises high density polyethylene (HDPE). In a specific embodiment, the hollow element essentially consists of one or more of these polymers. The hollow element preferably essentially consists of HDPE.

Steps (a) and (b) of the method of the invention can be carried out simultaneously. Preferably, however, step (a) is carried out prior to step (b).

Optionally, a cleaning step can be performed prior to step (a). In a preferred cleaning step, the polymeric surface of the hollow element to be subjected to steps (a) and (b) is contacted with a gas plasma generated from an inert gas or from a reducing gas. Preferred examples of inert gases include argon and/or carbon dioxide. A preferred example of a reducing gas is hydrogen. Preferably, the cleaning step is performed as the first step in the method of the invention.

In step (a) the polymeric surface is activated. As used herein, the term "activating" refers to any action that renders a polymeric surface more reactive, in particular more reactive to a gas plasma generated from a fluorinated C₂-C₄ hydrocarbon. Preferably, activation of the polymeric surface of the hollow element comprises contacting the polymeric surface with a gas plasma generated from a gaseous unsaturated hydrocarbon. Preferred examples of suitable gaseous unsaturated hydrocarbons are acetylene, butadiene and/or benzene. Most preferably, the polymeric surface is contacted with a gas plasma generated from gaseous acetylene.

In step (b) the polymeric surface of the hollow element is contacted with a gas plasma generated from at least one compound which is a fluorinated C₂-C₄ hydrocarbon. The fluorinated C₂-C₄ hydrocarbon may have two, three or four carbon atoms, with fluorinated C₂ hydrocarbons being preferred. The fluorinated C₂-C₄ hydrocarbon may be a saturated or an unsaturated compound. In one embodiment, the fluorinated C₂-C₄ hydrocarbon is characterized by the following formula (I)

CₓH_{y}F_{z} (I),

wherein x is 2 to 4, y is 0 to x, and z is 2x + 2 - y. Preferably, x is 2. Preferably, y is 1 to x, more preferably x is 2 and y is 1 or 2. Preferred are hydrocarbons which contain only carbon, fluor and optionally hydrogen atoms and more preferred are hydrocarbons as defined above, which contain at least one hydrogen atom. If the hydrocarbons are perfluorinated, it is preferred that they contain at least one double or triple bond.

Non-limiting examples of the fluorinated C₂-C₄ hydrocarbon include difluoroethane (C₂H₄F₂), trifluoroethane (C₂H₃F₃), tetrafluoroethane (C₂H₂F₄), pentafluoroethane (C₂HF₅), fluoroethene (C₂H₃F), difluoroethene (C₂H₂F₂), trifluoroethene (C₂HF₃), tetrafluoroethene (C₂F₄), 1,3-difluoropropane, 1,2,3-trifluoropropane, 1,1,2,3-tetrafluoropropane, 1,1,2,3,3-pentafluoropropane, 1,1,2,2,3,3-hexafluoropropane, isomers of trifluorobutane, isomers of tetrafluorobutane, isomers of pentafluorobutane, isomers of hexafluorobutane.

Most preferred are tetrafluoroethane and pentafluoroethane.

The plasma treatment according to the invention is preferably performed in a treatment chamber. Preferably the treatment chamber can be closed and evacuated. The treatment chamber may comprise a means for generating a gas plasma. The means for generating a gas plasma may be a device capable of emitting high-energy radiation, e.g., ultraviolet radiation, radio-frequency radiation or microwave radiation. Preferably, the chamber comprises a microwave generator. A suitable and preferred treatment chamber is disclosed e.g. in WO 02/087788 which is included herein by reference.

As used herein, "microwaves" refer to electromagnetic waves with frequencies between about 300 MHz and about 300GHz. Their respective wavelengths are between about 1 mm and about 1 m.

The dimensions of the treatment chamber are not particularly limited. The treatment chamber preferably has a cylindrical shape. The treatment chamber may have an internal length equal to 50 mm of higher, preferably equal to 100 mm of higher. This length is preferably equal to or lower than 10000 mm, preferably equal to or lower than 5000 mm. The treatment chamber may have an internal diameter equal to 50 mm of higher, preferably equal to 200 mm of higher. This diameter is preferably equal to or lower than 3000 mm, preferably equal to or lower than 2000 mm. Several (e.g., 2, 3, 4, 5, 6 or more) cylindrical parts may be connected to form the cylindrical treatment chamber.

The treatment chamber may be equipped with at least one means for evacuating the chamber.

Usually, the hollow element is placed in the treatment chamber prior to the plasma treatment. The treatment chamber with the hollow element may be evacuated such that the pressure in the chamber is less than 50 Pa, preferably less than 10 Pa, more preferably less than 5 Pa, most preferably less than 2 Pa, e.g., about 1 Pa.

In a subsequent step, a gas may be injected into the treatment chamber, and preferably such that the absolute pressure therein is equal to or higher than 2 Pa, preferably than 3 Pa, more preferably than 5 Pa. The absolute pressure therein is preferably equal to or lower than 100 Pa, preferably than 50 Pa, more preferably than 15 Pa.The most preferred absolute pressure is about 10 Pa. That pressure may be maintained during the plasma treatment. These pressures can be used for the optional cleaning step, for the activation step (a) and for the grafting step (b).

The treatment chamber is usually evacuated between the different plasma treating steps.

In a particularly preferred embodiment, the method of the invention comprises the following steps:
(i) the hollow element comprising a polymeric surface is introduced into a chamber equipped with at least one microwave generator;
(ii) the chamber is evacuated such that the absolute pressure therein is less than 5 Pa;
(iii) a gaseous unsaturated hydrocarbon is injected into the chamber such that the absolute pressure therein is from 5 Pa to 50 Pa;
(iv) the gaseous unsaturated hydrocarbon is subjected to microwave radiation generated by the microwave generator, at a frequency and intensity such that a plasma is created in the chamber;
(v) the chamber is evacuated such that the absolute pressure therein is less than 5 Pa;
(vi) the fluorinated C₂-C₄ hydrocarbon is injected into the chamber such that the absolute pressure therein is from 5 Pa to 50 Pa; and
(vii) the fluorinated C₂-C₄ hydrocarbon is subjected to microwave radiation delivered by the microwave generator, at a frequency and intensity such that a plasma is created in the chamber.

A gas in the treatment chamber may be subjected to high energy radiation at a frequency and intensity such that a plasma is created in the chamber. Microwaves may be generated at frequencies equal to or higher than 1 GHz, preferably than 2 GHz. These frequencies may be equal to or lower than 10 GHz, preferably than 5 GHz, more preferably than 3 GHz (a frequency of about 2.45 GHz giving good results). The power applied to convert the gas to plasma form will be selected in accordance with the effect sought to be achieved in the respective treatment step. In the following, the power densities will be expressed in terms of wattage per unit area of the surface to be treated. The exposure time is likewise variable and will be selected with considerations similar to those used for the power density.

If the optional cleaning step is carried out an inert gas or a reducing gas may be subjected to high energy radiation, e.g., microwave radiation such that a gas plasma is generated. The power densities applied to convert the "cleaning" gas to plasma are generally equal to or higher than 1 kW/m², preferably than 2 kW/m². These densities are generally equal to or lower than 10 kW/m², preferably than 5 kW/m². Typical exposure times for the optional cleaning step are equal to or higher than 5 seconds, preferably than 10 seconds, most preferably than 15 seconds. These exposure times are however generally equal to or lower than 30 seconds, preferably than 25 seconds.

In the activation step (a), a gas such as acetylene may be subjected to high energy radiation, e.g., microwave radiation, such that a gas plasma is generated. The power densities applied to convert the "activating" gas to plasma form may be equal to or larger than 5 kW/m², preferably than 8 kW/m², most preferably from than 10 kW/m². These power densities may be equal to or lower than 30 kW/m², preferably than 20 kW/m². Typical exposure times for the activation step may be equal to or higher than 0.5 second, preferably than 0.8 second, most preferably than 0.9 second. These exposure times may be equal to or lower than 2 seconds, preferably than 1.5 seconds, most preferably than 1.1 seconds.

In the grafting step (b), a fluorinated C₂-C₄ hydrocarbon may be subjected to high energy radiation, e.g., microwave radiation such that a gas plasma is generated. The power densities applied to convert the fluorinated C₂-C₄ hydrocarbon gas to plasma form may be equal to or higher than 7.5 to kW/m², preferably than 10 kW/m², most preferably than 15 kW/m². These power densities may be equal to or lower than 30 kW/m², preferably than 28 kW/m². Most preferably, the power density is about 25 kW/m². The exposure time for the grafting step may be equal to or higher than 6 seconds, more preferably than 8 seconds. Typical exposure times are equal to or lower than 100 seconds, more preferably than 20 seconds, still more preferably than 15 seconds.

The plasma treatment does not require elevated temperature and is readily performed at temperatures equal to or less than 60° C, preferably than 50° C, more preferably than 40°C, but generally equal to or above 20°C.

The flow rate of the gas may vary, but will typically be equal to or higher than 10 scc/min (measured under standard conditions of temperature and pressure, and expressed as cubic centimeters per minute), and preferably than 50 500 ssc/min. This flow rate may be equal to or lower than 1000 scc/min (measured under standard conditions of temperature and pressure, and expressed as cubic centimeters per minute), and preferably than 500 ssc/min. Optimal flow rates within these ranges will vary with the size of the treatment chamber.

In one embodiment, one hollow element is treated in the treatment chamber. In another embodiment, several (e.g., 2, 3, 4, 5, 6 or more) hollow elements are treated simultaneously in the treatment chamber. In that case, only a single plasma has to be generated for the entire chamber.

The products obtainable by the process of the invention are novel and exhibit superior barrier properties. The invention therefore also relates to a hollow element of a fuel system which is characterized in that it has a fluorinated C₂-C₄ hydrocarbon grafted on its surface. Preferably, the hollow element of a fuel system thus obtainable is a fuel tank, a fuel canister or a fuel pipe. The invention also relates to a hollow element of a fuel system obtainable by a process described herein.

The structure of the hollow element of the present invention is different from the structure of the prior art products, since the grafting of the fluorinated C₂-C₄ hydrocarbon creates a structure which is different from the structure created by the grafting of a fluorinated C₁-hydrocarbon. The different structures can be measured by different methods, e.g. by ¹⁹F-NMR-spectroscopy.

While not intending to be bound by any particular theory of mechanism or operation, it is believed that the grafting of the fluorinated molecules to the activated polymer results in a product in which fluorocarbon moieties are bound to the polymer via two covalent linkages. For example, if tetrafluoroethane (C₂H₂F₄) is used as the fluorinated C₂-C₄ hydrocarbon the structure of such fluorocarbon moieties is:

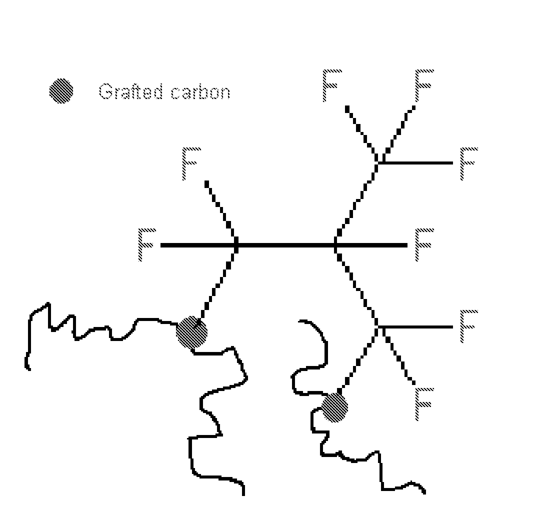

The presence of that structural element has been confirmed by ¹⁹F-NMR. The above structure may be designated as 1,3-grafted perfluoroisobutane. If other fluorinated C₂-C₄ hydrocarbons are used, different fluorocarbon moieties may be present at the surface of the product. Non-limiting examples are 1,4-grafted perfluoro-2,3-dimethylbutane resulting from the use of tetrafluoroethane (C₂H₂F₄) as fluorinated C₂-C₄ hydrocarbon, and 1,5-grafted perfluoro-2,3,4-trimethylpentane resulting from the use of hexafluorobutane (C₂F₆) as fluorinated C₂-C₄ hydrocarbon:

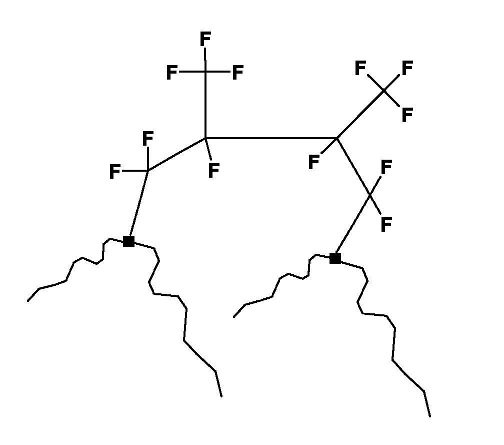

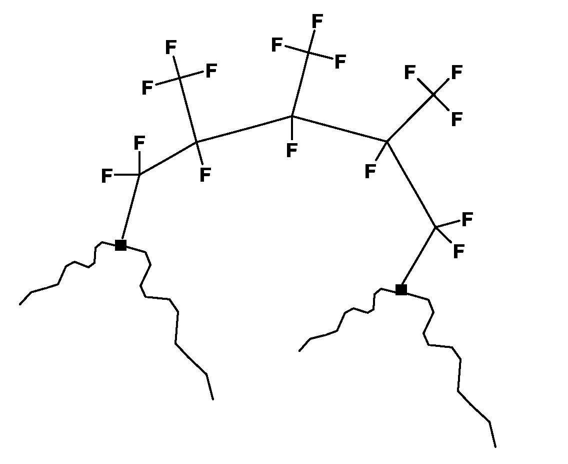

The invention therefore relates to a hollow element of a fuel system comprising a structure selected from the group consisting of -CF₂-CF(CF₃)-CF₂-, -CF₂-CF(CF₃)-CF(CF₃)-CF₂- and -CF₂-CF(CF₃)-CF(CF₃)-CF(CF₃)-CF₂.

As the fluorinated moieties are bound to the polymer via two linkages, their release from the surface upon contact with fuels, e.g., methanol containing fuels, is significantly reduced. In contrast, prior art processes which employ fluorinated C₁ compounds yield products in which fluorocarbon moieties are bound to the polymer through only one covalent bond. Such products show substantial release of the fluorinated moieties from the polymer surface and are not as resistant to mechanical stress.

The products of this invention therefore show reduced permeability to constituents of fuels. The reduced permeability persists for a long time. Consequently, the products of the invention are particularly useful in automotive industry, e.g. as fuel tanks or pipes.

Another aspect of the invention is the use of a fluorinated C₂-C₄ hydrocarbon for reducing the permeability of a fuel tank, a fuel canister or a fuel pipe with respect to methanol and/or hydrocarbons. The preferred embodiments of the use of the invention correspond to those of the method of the invention as described herein.

An example of a plasma cycle carried out according to a preferred embodiment of the present invention is decribed hereafter: a hollow element comprising a polymeric surface is placed in a treatment chamber; the treatment chamber is evacuated such that the pressure therein is about 1 Pa. Hydrogen is injected into the chamber such that the pressure in the chamber is about 10 Pa. A plasma is generated by way of microwave radiation for about 19 seconds (cleaning step). In a further evacuation step (such that the pressure is about 1 Pa), the "cleaning gas" is substantially removed from the chamber. Following the injection of acetylene, a plasma is generated for about 1 second (activation step). After removal of the "activation gas" by way of evacuation a fluorinated C₂-C₄ hydrocarbon (R 134 or CH2F4) is injected into the chamber and a plasma is generated for about 8 seconds (grafting step). In the latter step, the fluorinated hydrocarbon moieties are grafted onto the polymeric surface of the hollow element thus resulting in the unique surface structures.

Advantageously, one cycle can be completed within 30 seconds.

The following non-limiting examples further illustrate the invention.

### Product:

The products are 360 cc bottles essentially consisting of BP Solvay Eltex RSB 714 N0060 HDPE. They are produced by blow-molding on BM303 machine.

### Treatment:

The 360 cc bottles were subjected to the following treatment steps:
- pump the air out of the chamber and bottle until a primary vacuum (between 20 and 100 mbars);
- pursue the pumping of the air out of the bottle to carry an in-bottle vacuum rather far (down to 0.05 mbar);
- inject the ionized gases in the following sequence: hydrogen, acetylene, halocarbon;
- vent the chamber and unload the bottle.

### Permeability

The permeability has been evaluated by weight losses after reaching equilibrium with a minimum of 20 weeks of conditioning. The conditioning temperature is 40°C. The fluid used is either M0 (referenced non-oxygenated fuel (european reference CEC RF0203) or TF1 fuel (mix of M0 and 10% ethanol as described in SAE J1681, REV Jan 2000).

### Durability

The durability of the treatment is tested by a slosh test during the 20 weeks of conditioning. The slosh test consists of fixing the bottle filled with fuel on an oscillating frame (12 oscillations / min with a ± 15° amplitude).

For each example, 10 samples have been tested.

Table 1 illustrates the effects of different parameters on the permeability results: nature of the deposit, pressures during plasma generation, power inputs, nature of the pre-treatment gas.

| Description | | Pressure [mT] | Power [W] | Surface [kW/m²] | Gas flow [sccm] | Gaz sequence | Duration [sec] | Conditionning | | No Slosh ASTM Permeability | | | After Slosh ASTM Permeability | | |
|---|---|---|---|---|---|---|---|---|---|---|---|---|---|---|---|
| | | | | | | | | Fuel | Duration (days) | Average mg/d/m² | Min mg/d/m² | Max mg/d/m² | Average mg/d/m² | Min mg/d/m² | Max mg/d/m² |
| 1 | **Carbon treatment** | 50 | 300 | 8 | 100 | C2H2 | 3 | M0 | 15 | 35956 | | | | | |
| 2 | **Fluoride treatment** | 50 | 250 | 7 | 10 | HFC | 6 | M0 | 46 | 22995 | 4655 | 34505 | | | |
| | | | | | 10 | Ar | | | | | | | | | |
| 3 | **Silica treatment** | 50 | 250 | 7 | | SiOx + He | | M0 | 5 | 32712 | | | | | |
| | | | | | | C2H2 | | | | | | | | | |
| 4 | **Base Case** | 45 | 35 | 1 | 100 | Ar | 30 | M0 | 90 | 355 | 69 | 653 | 454 | 178 | 764 |
| | | | 300 | 8 | 80 | C2H2 | 1 | | | | | | | | |
| | | | 350 | 9 | 65 | HFC | 6 | | | | | | | | |
| 5 | **Power Effect** | 75 | 35 | 1 | 100 | Ar | 30 | M0 | 90 | 308 | 210 | 393 | 358 | 249 | 477 |
| | | | 300 | 8 | 80 | C2H2 | 1 | | | | | | | | |
| | | | 350 | 9 | 65 | HFC | 6 | | | | | | | | |
| 6 | | 75 | 35 | 1 | 100 | Ar | 30 | M0 | 90 | 427 | 164 | 894 | 507 | 228 | 973 |
| | | | 300 | 8 | 80 | C2H2 | 1 | | | | | | | | |
| | | | 250 | 7 | 65 | HFC | 6 | | | | | | | | |
| 7 | **Pressure Effect** | 45 | 35 | 1 | 100 | Ar | 30 | M0 | 90 | 244 | 220 | 260 | 432 | 329 | 507 |
| | | | 300 | 8 | 80 | C2H2 | 1 | | | | | | | | |
| | | | 450 | 12 | 65 | HFC | 6 | | | | | | | | |
| 8 | | 75 | 35 | 1 | 100 | Ar | 30 | M0 | 90 | 212 | 188 | 241 | 342 | 289 | 406 |
| | | | 300 | 8 | 80 | C2H2 | 1 | | | | | | | | |
| | | | 450 | 12 | 65 | HFC | 6 | | | | | | | | |
| 9 | | 110 | 35 | 1 | 100 | Ar | 30 | M0 | 90 | 178 | 164 | 188 | 310 | 268 | 358 |
| | | | 300 | 8 | 80 | C2H2 | 1 | | | | | | | | |
| | | | 450 | 12 | 65 | HFC | 6 | | | | | | | | |
| 10 | **Gas flow effect** | 75 | 35 | 1 | 100 | Ar | 30 | M0 | 90 | 212 | 164 | 265 | 271 | 228 | 318 |
| | | | 300 | 8 | 80 | C2H2 | 1 | | | | | | | | |
| | | | 350 | 9 | 130 | HFC | 6 | | | | | | | | |
| 11 | **Pre-treatment gas effect** | 70 | 35 | 1 | 100 | H2 | 30 | M0 | 90 | 135 | 85 | 172 | 271 | 149 | 347 |
| | | | 300 | 8 | 80 | C2H2 | 1 | | | | | | | | |
| | | | 250 | 7 | 65 | HFC | 6 | | | | | | | | |
| 12 | | 70 | 100 | 3 | 100 | H2 | 20 | TF1 | 90 | | | | 311 | 112 | 561 |
| | | | 300 | 8 | 80 | C2H2 | 1 | | | | | | | | |
| | | | 450 | 12 | 65 | HFC | 6 | | | | | | | | |

### Table 1: Examples

- Examples 1 to 3 shows the effect of carbon, fluoride and silica treatment: the permeation values are very high with few improvements as compared to untreated HDPE (typical permeation around 68000 mg/day/m²);
- Example 4 is the base case according to the present invention;
- Examples 5 and 6 are showing the effect of reduced power (from 350W to 250W), resulting in an increase of the permeation values and of the process variations;
- In examples 7 to 9, different pressures are tested (from 45 to 110mT); an icreased pressure leads to lower permeation values but is limited by the temperature (which could lead to surface buring) and the plasma initiation;
- For example 10, the HFC gas flow has been dubbled (from 65 sccm to 130 sccm), with better permeation results; this effect is however limited by the gas consumption;
- In exemples 11 and 12, the Argon preatreatment has been replaced by Hydrogen; this case shows the best permeation results, before and after slosh, with regular fuel (M0) and in presence of alcool.

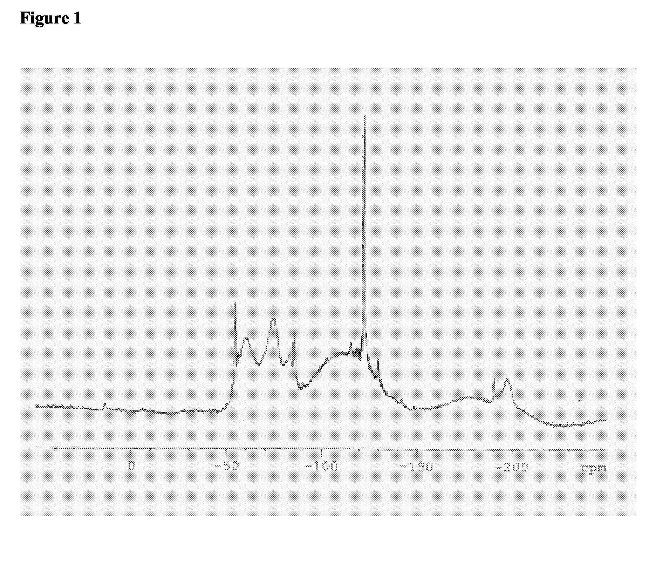

In this last example, the presence of CF₃ has been confirmed by by ¹⁹F-NMR (see figure 1: NMR (Nuclear Magnetic Resonance) spectrum of the treated inner surface). The analysis has been performed on material removed from the bottle inner surface. The different peaks appearing on figure 1 are described in table 2. Various CF₃ are identified between 50 and 120 ppm.

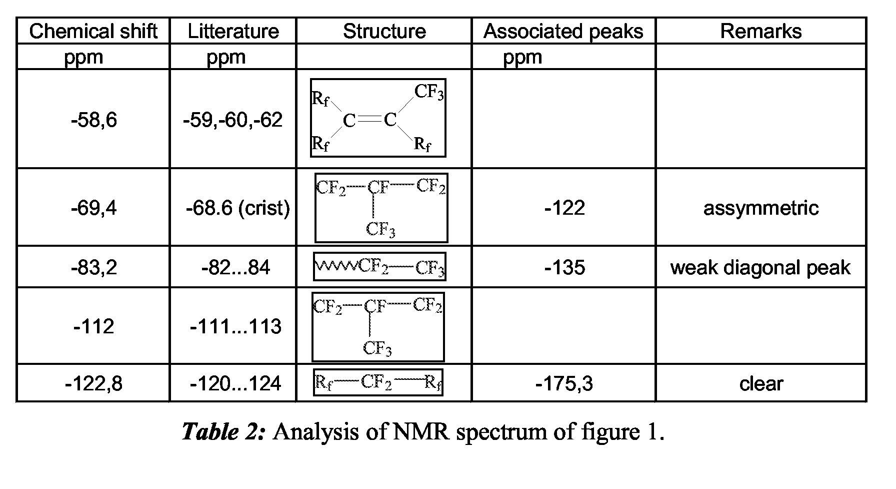

## Claims

1. A method for preparing a hollow element of a fuel system comprising that a hollow element comprising a polymeric surface is subjected to the following steps:
(a) activating the polymeric surface; and
(b) contacting the polymeric surface with a gas plasma generated from at least one compound which is a fluorinated C₂-C₄ hydrocarbon.

2. A method according to claim 1, wherein the fluorinated C₂-C₄ hydrocarbon is a compound of formula (I)
CₓH_{y}F_{z} (I),
wherein x is 2 to 4, y is 0 to x, and z is 2x + 2 - y.

3. A method according to claim 2 wherein x is 2.

4. A method according to any one of claims 1 to 3 wherein the fluorinated C₂-C₄ hydrocarbon is selected from the group consisting of tetrafluoroethane and pentafluoroethane.

5. A method according to any one of claims 1 to 4 wherein step (a) comprises contacting the polymeric surface with a gas plasma generated from a gaseous unsaturated hydrocarbon.

6. A method according to claim 5 wherein the unsaturated hydrocarbon is selected from the group consisting of acetylene, butadiene and benzene.

7. A method according to any one of claims 1 to 6, **characterized in that** prior to step (a) the polymeric surface is cleaned by contacting it with a gas plasma generated from an inert gas or from a reducing gas.

8. A method according to claim 7 wherein the inert gas or the reducing gas is selected from the group consisting of argon, carbon dioxide and hydrogen.

9. A method according to any one of claims 1 to 8 wherein the polymeric surface comprises polyethylene, polyethylene terephthalate, polybutylene terephthalate, polyamide, polyoxymethylene, polypropylene, elastomers and/or metals.

10. A method according to claim 9 wherein the polymeric surface comprises high density polyethylene.

11. A method according to any one of claims 1 to 10 wherein the following steps are carried out:
(i) the hollow element comprising a polymeric surface is introduced into a chamber equipped with at least one microwave generator;
(ii) the chamber is evacuated such that the absolute pressure therein is less than 5 Pa;
(iii) a gaseous unsaturated hydrocarbon is injected into the chamber such that the absolute pressure therein is from 5 Pa to 50 Pa;
(iv) the gaseous unsaturated hydrocarbon is subjected to microwave radiation generated by the microwave generator, at a frequency and intensity such that a plasma is created in the chamber;
(v) the chamber is evacuated such that the absolute pressure therein is less than 5 Pa;
(vi) the fluorinated C₂-C₄ hydrocarbon is injected into the chamber such that the absolute pressure therein is from 5 Pa to 50 Pa; and
(vii) the fluorinated C₂-C₄ hydrocarbon is subjected to microwave radiation delivered by the microwave generator, at a frequency and intensity such that a plasma is created in the chamber.

12. A hollow element of a fuel system **characterized in that** it has a fluorinated C₂-C₄ hydrocarbon as defined in any of claims 1 to 4 grafted on its surface.

13. A hollow element of a fuel system according to claim 12 which is a fuel tank, a fuel canister or a fuel pipe.

14. The use of a fluorinated C₂-C₄ hydrocarbon for reducing the permeability of a fuel tank, a fuel canister or a fuel pipe with respect to methanol and/or hydrocarbons.
